(19) Europäisches Patentamt
European Patent Office
Office européen des brevets

(11) **EP 3 595 059 A1**

(12) **EUROPEAN PATENT APPLICATION**
published in accordance with Art. 153(4) EPC

(43) Date of publication:
**15.01.2020 Bulletin 2020/03**

(51) Int Cl.:
*H01M 4/505* (2010.01)  *C01G 45/00* (2006.01)
*C01G 51/00* (2006.01)  *C01G 53/00* (2006.01)
*H01M 4/485* (2010.01)  *H01M 4/525* (2010.01)
*H01M 10/052* (2010.01)  *H01M 10/0562* (2010.01)
*H01M 10/0565* (2010.01)  *H01M 10/0566* (2010.01)
*C01G 45/12* (2006.01)

(21) Application number: **17900203.5**

(22) Date of filing: **20.11.2017**

(86) International application number:
**PCT/JP2017/041590**

(87) International publication number:
**WO 2018/163518 (13.09.2018 Gazette 2018/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **06.03.2017  JP 2017041776**

(71) Applicant: **Panasonic Intellectual Property
Management Co., Ltd.
Osaka-shi, Osaka 540-6207 (JP)**

(72) Inventors:
• **IKEUCHI Issei
  Osaka 540-6207 (JP)**
• **NATSUI Ryuichi
  Osaka 540-6207 (JP)**
• **NAKURA Kensuke
  Osaka 540-6207 (JP)**

(74) Representative: **Grünecker Patent- und
Rechtsanwälte
PartG mbB
Leopoldstraße 4
80802 München (DE)**

(54) **POSITIVE ELECTRODE ACTIVE MATERIAL, AND CELL**

(57)    A positive-electrode active material contains a lithium composite oxide containing at least one selected from the group consisting of F, Cl, N, S, Br, and I. The crystal structure of the lithium composite oxide belongs to the space group R-3m. The integrated intensity ratio $I_{(003)}/I_{(104)}$ of a peak on the (003) plane to a peak on the (104) plane in an XRD pattern of the lithium composite oxide satisfies $0.62 \leq I_{(003)}/I_{(104)} \leq 0.90$.

EP 3 595 059 A1

## Description

Technical Field

The present disclosure relates to a positive-electrode active material for use in batteries and to a battery.

Background Art

Patent Literature 1 discloses a lithium-containing composite oxide essentially containing Li, Ni, Co, and Mn, wherein the lithium-containing composite oxide has a crystal structure belonging to the space group R-3m, in which the c-axis lattice constant ranges from 14.208 to 14.228 angstroms, and the a-axis lattice constant and the c-axis lattice constant satisfy the relationship $3a + 5.615 \leq c \leq 3a + 5.655$, and the integrated intensity ratio ($I_{003}/I_{104}$) of a (003) peak to a (104) peak in an XRD pattern of the lithium-containing composite oxide ranges from 1.21 to 1.39.

Citation List

Patent Literature

PTL 1: Japanese Unexamined Patent Application Publication No. 2016-26981

Summary of Invention

Technical Problem

In the related art, there is a demand for batteries with a high energy density. Solution to Problem

A positive-electrode active material according to one aspect of the present disclosure contains a lithium composite oxide containing at least one selected from the group consisting of F, Cl, N, S, Br, and I, wherein the lithium composite oxide has a crystal structure belonging to a space group R-3m, and the integrated intensity ratio $I_{(003)}/I_{(104)}$ of a peak on the (003) plane to a peak on the (104) plane in an XRD pattern of the lithium composite oxide satisfies $0.62 \leq I_{(003)}/I_{(104)} \leq 0.90$.

It should be noted that general or specific aspects of the present disclosure may be implemented as a positive-electrode active material for batteries, a battery, a method, or any combination thereof.

Advantageous Effects of Invention

The present disclosure can provide a battery with a high energy density. Brief Description of Drawings

[Fig. 1] Fig. 1 is a schematic cross-sectional view of a battery 10, which is an example of a battery according to a second embodiment.

[Fig. 2] Fig. 2 is an X-ray powder diffraction chart of a positive-electrode active material according to Example 1.

Description of Embodiments

Embodiments of the present disclosure will be described below.

(First Embodiment)

A positive-electrode active material according to a first embodiment is a positive-electrode active material containing a lithium composite oxide, wherein the lithium composite oxide contains one or two or more elements selected from the group consisting of F, Cl, N, S, Br, and I. The lithium composite oxide has a crystal structure belonging to the space group R-3m, and the integrated intensity ratio $I_{(003)}/I_{(104)}$ of a peak on the (003) plane to a peak on the (104) plane in an XRD pattern of the lithium composite oxide satisfies $0.62 \leq I_{(003)}/I_{(104)} \leq 0.90$.

Such an embodiment can provide a battery with a high energy density.

For example, when the positive-electrode active material is used to fabricate a lithium-ion battery, the lithium-ion battery has an oxidation-reduction potential of approximately 3.6 V (versus Li/Li$^+$).

The lithium composite oxide contains one or two or more elements selected from the group consisting of F, Cl, N, S, Br, and I. The substitution of these electrochemically inactive anions for part of oxygen stabilizes the crystal structure. This improves the discharge capacity or operating voltage of the battery and increases the energy density.

The integrated intensity ratio $I_{(003)}/I_{(104)}$ of a peak on the (003) plane to a peak on the (104) plane in an X-ray diffraction (XRD) pattern of the lithium composite oxide satisfies $0.62 \leq I_{(003)}/I_{(104)} \leq 0.90$.

$I_{(003)}/I_{(104)}$ is a parameter that can be an indicator of cation mixing in a lithium composite oxide with a crystal structure belonging to the space group R-3m. The term "cation mixing", as used herein, refers to the substitution of a cation between lithium atoms and cation atoms of a transition metal or the like in a crystal structure of a lithium composite oxide. A decrease in cation mixing results in an increase in $I_{(003)}/I_{(104)}$. On the other hand, an increase in cation mixing results in a decrease in $I_{(003)}/I_{(104)}$.

In the lithium composite oxide according to the first embodiment, $I_{(003)}/I_{(104)}$ of more than 0.90 results in a decrease in three-dimensional diffusion paths of lithium due to reduced cation mixing. This reduces the diffusion of lithium and decreases the energy density.

$I_{(003)}/I_{(104)}$ of less than 0.62 results in an unstable crystal structure. Thus, deintercalation of Li during charging causes the crystal structure to collapse and decreases the energy density.

The lithium composite oxide according to the first embodiment, in which $I_{(003)}/I_{(104)}$ satisfies $0.62 \leq I_{(003)}/I_{(104)} \leq 0.90$, includes sufficient cation mixing between lithium atoms and cation atoms of a transition metal or the like. Thus, the lithium composite oxide according to the first embodiment has an increased number of three-dimensional diffusion paths of lithium. Thus, the lithium composite oxide according to the first embodiment allows more Li to be intercalated and deintercalated than known positive-electrode active materials.

The lithium composite oxide according to the first embodiment, which has a crystal structure belonging to the space group R-3m and satisfies $0.62 \leq I_{(003)}/I_{(104)} \leq 0.90$, can stably maintain the crystal structure even when much Li is deintercalated, because a transition metal anion octahedron serving as a pillar three-dimensionally forms a network. Thus, the positive-electrode active material according to the first embodiment is suitable for high-capacity batteries. For the same reasons, the positive-electrode active material according to the first embodiment is also suitable for batteries with good cycle characteristics.

Patent Literature 1 is described below as a comparative example. Patent Literature 1 discloses a positive-electrode active material containing a lithium composite oxide that has a crystal structure belonging to the space group R-3m and that includes insufficient cation mixing between lithium atoms and cation atoms of a transition metal or the like. As described in Patent Literature 1, it has been believed that cation mixing in a lithium composite oxide should be reduced.

A positive-electrode active material according to a first embodiment is a positive-electrode active material containing a lithium composite oxide, wherein the lithium composite oxide contains one or two or more elements selected from the group consisting of F, Cl, N, S, Br, and I. The lithium composite oxide has a crystal structure belonging to the space group R-3m, and the integrated intensity ratio $I_{(003)}/I_{(104)}$ of a peak on the (003) plane to a peak on the (104) plane in an XRD pattern of the lithium composite oxide satisfies $0.62 \leq I_{(003)}/I_{(104)} \leq 0.90$. Under these conditions, the present inventors have developed a battery with a much higher energy density than expected.

The lithium composite oxide according to the first embodiment may satisfy $0.67 \leq I_{(003)}/I_{(104)} \leq 0.85$.

Such an embodiment can provide a battery with a higher energy density.

Typically, a peak on the (003) plane and a peak on the (104) plane in an XRD pattern obtained with CuK$\alpha$ radiation are located at a diffraction angle $2\theta$ in the range of 18 to 20 degrees and 44 to 46 degrees, respectively.

The integrated intensity of each diffraction peak can be determined, for example, using software associated with an XRD apparatus (for example, PDXL associated with an X-ray powder diffractometer manufactured by Rigaku Corporation). In this case, the integrated intensity of each diffraction peak can be determined, for example, by calculating the area at the diffraction peak top angle $\pm$ 3 degrees.

The lithium composite oxide according to the first embodiment may contain one or two or more elements selected from the group consisting of F, Cl, N, and S.

Such an embodiment can provide a battery with a higher energy density.

The lithium composite oxide according to the first embodiment may contain F.

Such an embodiment partly substitutes electronegative F for oxygen and thereby promotes cation-anion interaction and improves the discharge capacity or operating voltage of the battery. Substitution of part of oxygen by F with a large ionic radius expands the crystal lattice and stabilizes the structure. Thus, the battery can have a higher energy density.

The lithium composite oxide according to the first embodiment may contain one or two or more elements selected from the group consisting of Mn, Co, Ni, Fe, Cu, V, Nb, Mo, Ti, Cr, Zr, Zn, Na, K, Ca, Mg, Pt, Au, Ag, Ru, W, B, Si, P, and Al, for example.

Such an embodiment can provide a battery with a higher energy density.

The lithium composite oxide according to the first embodiment may contain at least one selected from the group consisting of Mn, Co, Ni, Fe, Cu, V, Ti, Cr, and Zn, that is, at least one 3d transition metal element.

Such an embodiment can provide a battery with a higher energy density.

The lithium composite oxide according to the first embodiment may contain one or two or more elements selected from the group consisting of Mn, Co, and Ni.

Such an embodiment including a transition metal that can easily form a hybrid orbital with oxygen reduces oxygen desorption during charging. This can stabilize the crystal structure and provide a battery with a higher energy density.

The lithium composite oxide according to the first embodiment may contain Mn.

Such an embodiment including Mn, which can easily form a hybrid orbital with oxygen, reduces oxygen desorption during charging. This can stabilize the crystal structure and provide a battery with a higher energy density.

The lithium composite oxide according to the first embodiment may contain Mn and one or two or more elements selected from the group consisting of Co, Ni, Fe, Al, Cu, V, Nb, Mo, Ti, Cr, Zr, Zn, Na, K, Ca, Mg, Pt, Au, Ag, Ru, W, B, Si, and P.

Such an embodiment reduces oxygen desorption during charging as compared with the case where Mn is used alone as a cation element other than Li. This can stabilize the crystal structure and provide a battery with a higher energy density.

The lithium composite oxide according to the first embodiment may contain Mn and one or two elements selected from the group consisting of Co and Ni.

Such an embodiment can provide a battery with a higher energy density.

An example of the chemical composition of the lithium composite oxide according to the first embodiment is described below.

The lithium composite oxide according to the first embodiment may be a compound represented by the following composition formula (1).

$$Li_xMe_yO_\alpha X_\beta \qquad \text{formula (1)}$$

Me may be one or two or more elements selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si, and P.

Me may include at least one selected from the group consisting of Mn, Co, Ni, Fe, Cu, V, Ti, Cr, and Zn, that is, at least one 3d transition metal element.

X may be one or two or more elements selected from the group consisting of F, Cl, N, S, Br, and I.

The composition formula (1) may satisfy the following conditions:

$$0.5 \leq x \leq 1.5,$$

$$0.5 \leq y \leq 1.0,$$

$$1 \leq \alpha < 2,$$

$$0 < \beta \leq 1.$$

Such an embodiment can provide a battery with a higher energy density.

In the first embodiment, if Me denotes two or more elements (for example, Me' and Me") with a component ratio of "Me'$_{y1}$Me"$_{y2}$", then "y = y1 + y2". For example, if Me denotes two elements (Mn and Co) with a component ratio of "Mn$_{0.4}$Co$_{0.4}$", then "y = 0.4 + 0.4 = 0.8". If X denotes two or more elements, the same calculation as in Me can be performed.

In a compound represented by the composition formula (1), x of 0.5 or more results in an increased amount of available Li. This improves the energy density.

In a compound represented by the composition formula (1), x of 1.5 or less results in an increase in the oxidation-reduction reaction of available Me. This obviates the need to increase the utilization of an oxidation-reduction reaction of oxygen. This stabilizes the crystal structure. This improves the energy density.

In a compound represented by the composition formula (1), y of 0.5 or more results in an increase in the oxidation-reduction reaction of available Me. This obviates the need to increase the utilization of an oxidation-reduction reaction of oxygen. This stabilizes the crystal structure. This improves the energy density.

In a compound represented by the composition formula (1), y of 1.0 or less results in an increased amount of available Li. This improves the energy density.

In a compound represented by the composition formula (1), $\alpha$ of 1 or more results in the prevention of a decrease in the amount of charge compensation due to oxidation-reduction of oxygen. This improves the energy density.

In a compound represented by the composition formula (1), $\alpha$ of less than 2 results in the prevention of excess capacity due to oxidation-reduction of oxygen and results in stabilization of the structure when Li is deintercalated. This improves the energy density.

In a compound represented by the composition formula (1), $\beta$ of more than 0 results in stabilization of the structure when Li is deintercalated due to the effects of electrochemically inactive X. This improves the energy density.

In a compound represented by the composition formula (1), $\beta$ of 1 or less results in the prevention of an increase in the effects of electrochemically inactive X and results in improved electronic conductivity. This improves the energy density.

A compound represented by the composition formula (1) may satisfy $1.67 \leq \alpha \leq 1.95$.

Such an embodiment can provide a battery with a higher energy density.

A compound represented by the composition formula (1) may satisfy $0.05 \leq \beta \leq 0.33$.

Such an embodiment can provide a battery with a higher energy density.

A compound represented by the composition formula (1) may satisfy $0.5 \leq x/y \leq 3.0$.

Such an embodiment can provide a battery with a higher energy density.

x/y of 0.5 or more results in an increased amount of available Li. This can prevent the blockage of Li diffusion paths. This improves the energy density. x/y of 3.0 or less results in an increase in an oxidation-reduction reaction of available Me. This obviates the need to increase the utilization of an oxidation-reduction reaction of oxygen. This stabilizes the crystal structure when Li is deintercalated during charging and improves the Li intercalation efficiency during discharging. This improves the energy density.

A compound represented by the composition formula (1) may satisfy $1.5 \leq x/y \leq 2.0$.

Such an embodiment results in the number of Li atoms at the Li site larger than that in known positive-electrode active materials (for example, $LiMnO_2$). This allows more Li to be intercalated and deintercalated and can provide a battery with a higher energy density.

A compound represented by the composition formula (1) may satisfy $5 \leq \alpha/\beta \leq 39$.

Such an embodiment can provide a battery with a higher energy density.

$\alpha/\beta$ of 5 or more results in an increased amount of charge compensation due to oxidation-reduction of oxygen. This can also prevent an increase in the effects of electrochemically inactive X and improves electronic conductivity. This improves the energy density. $\alpha/\beta$ of 39 or less results in the prevention of excess capacity due to oxidation-reduction of oxygen and results in stabilization of the structure when Li is deintercalated. Due to the effects of electrochemically inactive X, this also stabilizes the structure when Li is deintercalated. This improves the energy density.

A compound represented by the composition formula (1) may satisfy $9 \leq \alpha/\beta \leq 19$.

Such an embodiment can provide a battery with a higher energy density.

A compound represented by the composition formula (1) may satisfy $0.75 \leq (x + y)/(\alpha + \beta) \leq 1.15$.

Such an embodiment can provide a battery with a higher energy density.

$(x + y)/(\alpha + \beta)$ of 0.75 or more results in the prevention of phase separation to form many impurities during synthesis. This improves the energy density. $(x + y)/(\alpha + \beta)$ of 1.15 or less results in the formation of a structure with less anion deficiency, stabilization of the crystal structure when Li is deintercalated during charging, and improved Li intercalation efficiency during discharging. This improves the energy density.

In a compound represented by the composition formula (1), X may contain one or two or more elements selected from the group consisting of F, Cl, N, and S.

Such an embodiment can provide a battery with a higher energy density.

In a compound represented by the composition formula (1), X may contain F.

Thus, X may be F.

Alternatively, X may include F and one or two or more elements selected from the group consisting of Cl, N, S, Br, and I.

Such an embodiment partly substitutes electronegative F for oxygen and thereby promotes cation-anion interaction and improves the discharge capacity or operating voltage of the battery. Substitution of part of oxygen by F with a large ionic radius expands the crystal lattice and stabilizes the structure. Thus, the battery can have a higher energy density.

In a compound represented by the composition formula (1), Me may include one or two or more elements selected from the group consisting of Mn, Co, and Ni.

Such an embodiment including a transition metal that can easily form a hybrid orbital with oxygen reduces oxygen desorption during charging. This can stabilize the crystal structure and provide a battery with a higher energy density.

In a compound represented by the composition formula (1), Me may include Mn.

Thus, Me may be Mn.

Such an embodiment including Mn, which can easily form a hybrid orbital with oxygen, reduces oxygen desorption during charging. This can stabilize the crystal structure and provide a battery with a higher energy density.

Alternatively, Me may include Mn and one or two or more elements selected from the group consisting of Co, Ni, Fe, Al, Cu, V, Nb, Mo, Ti, Cr, Zr, Zn, Na, K, Ca, Mg, Pt, Au, Ag, Ru, W, B, Si, and P.

Such an embodiment further reduces oxygen desorption during charging as compared with the case where Mn is used alone as a cation element other than Li. This can stabilize the crystal structure and provide a battery with a higher energy density.

Me may include Mn and one or two elements selected from the group consisting of Co and Ni.

Such an embodiment can provide a battery with a higher energy density.

Me may include Mn that constitutes 40% or more by mole of Me. In other words, the mole ratio of Mn to the whole Me including Mn (Mn/Me ratio) may range from 0.4 to 1.0.

Such an embodiment including sufficient Mn, which can easily form a hybrid orbital with oxygen, reduces oxygen desorption during charging. This can stabilize the crystal structure and provide a battery with a higher energy density.

In the lithium composite oxide according to the first embodiment, Li may partly be substituted with an alkali metal, such as Na or K.

The positive-electrode active material according to the first embodiment may contain the lithium composite oxide as a main component (that is, the mass ratio of the lithium composite oxide to the positive-electrode active material is 50% or more (50% or more by mass)).

Such an embodiment can provide a battery with a higher energy density.

The mass ratio of the lithium composite oxide to the positive-electrode active material according to the first embodiment may be 70% or more (70% or more by mass).

Such an embodiment can provide a battery with a higher energy density.

The mass ratio of the lithium composite oxide to the positive-electrode active material according to the first embodiment may be 90% or more (90% or more by mass).

Such an embodiment can provide a battery with a higher energy density.

The positive-electrode active material according to the first embodiment may contain incidental impurities in addition to the lithium composite oxide.

The positive-electrode active material according to the first embodiment may contain at least one selected from the group consisting of the starting materials for the synthesis of the positive-electrode active material, by-products, and degradation products, in addition to the lithium composite oxide.

The positive-electrode active material according to the first embodiment may contain the lithium composite oxide alone except for incidental impurities, for example.

Such an embodiment can provide a battery with a higher energy density.

<Method for Producing Compound>

A method for producing a lithium composite oxide contained in the positive-electrode active material according to the first embodiment is described below.

The lithium composite oxide according to the first embodiment can be produced by the following method, for example.

A raw material containing Li, a raw material containing Me, and a raw material containing X are prepared.

Examples of the raw material containing Li include oxides, such as $Li_2O$ and $Li_2O_2$, salts, such as $Li_2CO_3$ and LiOH, and lithium composite oxides, such as $LiMeO_2$ and $LiMe_2O_4$.

Examples of the raw material containing Me include oxides in various oxidation states, such as $Me_2O_3$, salts, such as $MeCO_3$ and $MeNO_3$, hydroxides, such as $Me(OH)_2$ and MeOOH, and lithium composite oxides, such as $LiMeO_2$ and $LiMe_2O_4$.

In the case that Me is Mn, examples of the raw material containing Mn include manganese oxides in various oxidation states, such as $MnO_2$ and $Mn_2O_3$, salts, such as $MnCO_3$ and $MnNO_3$, hydroxides, such as $Mn(OH)_2$ and MnOOH, and lithium composite oxides, such as $LiMnO_2$ and $LiMn_2O_4$.

Examples of the raw material containing X include lithium halides, transition metal halides, transition metal sulfides, and transition metal nitrides.

For example, if X is F, examples of the raw material containing F include LiF and transition metal fluorides.

These raw materials are weighed at the mole ratio of the composition formula (1), for example.

The variables "x, y, $\alpha$, and $\beta$" in the composition formula (1) can be altered in the ranges described for the composition formula (1).

The weighed raw materials are mixed, for example, by a dry process or a wet process and are allowed to react mechanochemically for 10 hours or more to produce a compound. For example, a mixing apparatus, such as a ball mill, may be used.

Subsequently, the compound can be fired in the air to produce the lithium composite oxide according to the first embodiment.

The conditions for the heat treatment are appropriately determined to produce the lithium composite oxide according to the first embodiment. Although the optimum heat treatment conditions depend on other production conditions and the target composition, the present inventors found that $I_{(003)}/I_{(104)}$ tends to increase with the heat treatment temperature and the heat treatment time. Thus, the manufacturer can determine the heat treatment conditions on the basis of this tendency. The heat treatment temperature and time may range from 300°C to 700°C and 1 to 5 hours, for example.

Thus, the raw materials to be used and the mixing conditions and the firing conditions of the raw materials can be adjusted to substantially produce the lithium composite oxide according to the first embodiment.

For example, the use of a lithium transition metal composite oxide as a precursor can decrease the energy for mixing elements. This can improve the purity of the lithium composite oxide according to the first embodiment.

The composition of the lithium composite oxide can be determined, for example, by ICP spectroscopy, an inert gas fusion-infrared absorption method, ion chromatography, or a combination thereof.

The space group of the crystal structure of the lithium composite oxide can be determined by powder X-ray analysis.

Thus, a method for producing the positive-electrode active material according to the first embodiment includes a step (a) of preparing the raw materials and a step (b) of mechanochemically reacting the raw materials and firing the product in the air to produce the positive-electrode active material.

The step (a) may include a step of mixing the raw materials at a Li/Me mole ratio in the range of 0.5 to 3.0 to prepare a raw material mixture.

The step (a) may include a step of producing a lithium composite oxide as a raw material by a known method.

The step (a) may include a step of mixing the raw materials at a Li/Me mole ratio in the range of 1.5 to 2.0 to prepare a raw material mixture.

The step (b) may include a step of mechanochemically reacting the raw materials in a ball mill.

Thus, the lithium composite oxide according to the first embodiment can be synthesized by mechanochemically reacting a precursor (for example, $Li_2O$, an oxidized transition metal, a lithium composite oxide, etc.) in a planetary ball mill and subsequently firing the product in the air.

(Second Embodiment)

A second embodiment is described below. The contents described in the first embodiment are appropriately omitted to avoid overlap.

A battery according to the second embodiment includes a positive electrode containing the positive-electrode active material according to the first embodiment, a negative electrode, and an electrolyte.

Such an embodiment can provide a battery with a high energy density.

In the battery according to the second embodiment, the positive electrode may have a positive-electrode active material layer. The positive-electrode active material layer may contain the positive-electrode active material according to the first embodiment as a main component (that is, the mass ratio of the positive-electrode active material to the positive-electrode active material layer is 50% or more (50% or more by mass)).

Such an embodiment can provide a battery with a higher energy density.

Alternatively, the positive-electrode active material layer in the battery according to the second embodiment may contain the positive-electrode active material according to the first embodiment constituting 70% or more of the positive-electrode active material layer on a mass basis (70% or more by mass).

Such an embodiment can provide a battery with a higher energy density.

Alternatively, the positive-electrode active material layer in the battery according to the second embodiment may contain the positive-electrode active material according to the first embodiment constituting 90% or more of the positive-electrode active material layer on a mass basis (90% or more by mass).

Such an embodiment can provide a battery with a higher energy density.

The battery according to the second embodiment may be a lithium-ion secondary battery, a non-aqueous electrolyte secondary battery, or an all-solid-state battery, for example.

In the battery according to the second embodiment, the negative electrode may contain a negative-electrode active material that can adsorb and desorb lithium ions, for example. The negative electrode may contain a material that can dissolve and precipitate lithium metal as a negative-electrode active material, for example.

In the battery according to the second embodiment, for example, the electrolyte may be a non-aqueous electrolyte (for example, a non-aqueous electrolyte solution).

In the battery according to the second embodiment, the electrolyte may be a solid electrolyte, for example.

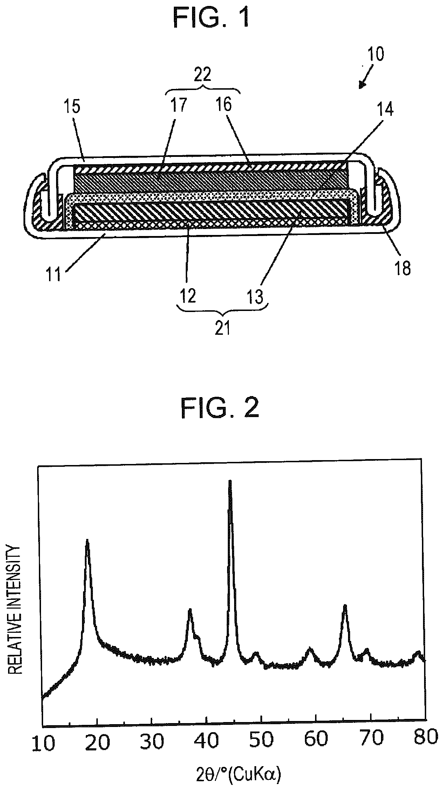

Fig. 1 is a schematic cross-sectional view of a battery 10, which is an example of the battery according to the second embodiment.

As illustrated in Fig. 1, the battery 10 includes a positive electrode 21, a negative electrode 22, a separator 14, a case 11, a sealing plate 15, and a gasket 18.

The separator 14 is disposed between the positive electrode 21 and the negative electrode 22.

The positive electrode 21, the negative electrode 22, and the separator 14 are impregnated with a non-aqueous electrolyte (for example, a non-aqueous electrolyte solution), for example.

The positive electrode 21, the negative electrode 22, and the separator 14 constitute an electrode assembly.

The electrode assembly is housed in the case 11.

The case 11 is sealed with the gasket 18 and the sealing plate 15.

The positive electrode 21 includes a positive-electrode current collector 12 and a positive-electrode active material layer 13 disposed on the positive-electrode current collector 12.

The positive-electrode current collector 12 is formed of a metallic material (aluminum, stainless steel, an aluminum alloy, etc.), for example.

The positive-electrode current collector 12 may be omitted, and the case 11 may be used as a positive-electrode current collector.

The positive-electrode active material layer 13 contains the positive-electrode active material according to the first embodiment.

If necessary, the positive-electrode active material layer 13 may contain an additive agent (an electrically conductive agent, an ionic conduction aid, a binder, etc.).

The negative electrode 22 includes a negative-electrode current collector 16 and a negative-electrode active material layer 17 disposed on the negative-electrode current collector 16.

The negative-electrode current collector 16 is formed of a metallic material (aluminum, stainless steel, an aluminum alloy, etc.), for example.

The negative-electrode current collector 16 may be omitted, and the sealing plate 15 may be used as a negative-electrode current collector.

The negative-electrode active material layer 17 contains a negative-electrode active material.

If necessary, the negative-electrode active material layer 17 may contain an additive agent (an electrically conductive agent, an ionic conduction aid, a binder, etc.).

The negative-electrode active material may be a metallic material, carbon material, oxide, nitride, tin compound, or silicon compound.

The metallic material may be a single metal. Alternatively, the metallic material may be an alloy. Examples of the metallic material include lithium metal and lithium alloys.

Examples of the carbon material include natural graphite, coke, carbon under graphitization, carbon fiber, spherical carbon, artificial graphite, and amorphous carbon.

From the perspective of capacity density, the negative-electrode active material may be silicon (Si), tin (Sn), a silicon compound, or a tin compound. The silicon compound and the tin compound may be an alloy or a solid solution.

Examples of the silicon compound include $SiO_x$ (wherein $0.05 < x < 1.95$). A compound (an alloy or a solid solution) produced by substituting part of silicon of $SiO_x$ with another element may also be used. The other element may be at least one selected from the group consisting of boron, magnesium, nickel, titanium, molybdenum, cobalt, calcium, chromium, copper, iron, manganese, niobium, tantalum, vanadium, tungsten, zinc, carbon, nitrogen, and tin.

Examples of the tin compound include $Ni_2Sn_4$, $Mg_2Sn$, $SnO_x$ (wherein $0 < x < 2$), $SnO_2$, and $SnSiO_3$. A tin compound selected from these compounds may be used alone. Alternatively, two or more tin compounds selected from these compounds may be used in combination.

The negative-electrode active material may have any shape. The negative-electrode active material may have a known shape (particulate, fibrous, etc.).

The negative-electrode active material layer 17 may be filled with (adsorb) lithium by any method. More specifically, the method may be (a) a method of depositing lithium on the negative-electrode active material layer 17 by a gas phase method, such as a vacuum evaporation method, or (b) a method of heating a lithium metal foil in contact with the negative-electrode active material layer 17. In these methods, lithium can be diffused into the negative-electrode active material layer 17 by heat. Alternatively, lithium may be electrochemically adsorbed on the negative-electrode active material layer 17. More specifically, a battery is fabricated from the negative electrode 22 free of lithium and a lithium metal foil (positive electrode). Subsequently, the battery is charged to adsorb lithium on the negative electrode 22.

Examples of the binder for the positive electrode 21 and the negative electrode 22 include poly(vinylidene difluoride), polytetrafluoroethylene, polyethylene, polypropylene, aramid resin, polyamide, polyimide, polyamideimide, polyacrylonitrile, poly(acrylic acid), poly(methyl acrylate), poly(ethyl acrylate), poly(hexyl acrylate), poly(methacrylic acid), poly(methyl methacrylate), poly(ethyl methacrylate), poly(hexyl methacrylate), poly(vinyl acetate), polyvinylpyrrolidone, polyether, polyethersulfone, hexafluoropolypropylene, styrene-butadiene rubber, and carboxymethylcellulose. Other examples of the binder include copolymers of two or more materials selected from the group consisting of tetrafluoroethylene, hexafluoroethane, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. The binder may also be a mixture of two or more materials selected from these materials.

Examples of the electrically conductive agent for the positive electrode 21 and the negative electrode 22 include graphite, carbon black, electrically conductive fiber, graphite fluoride, metal powders, electrically conductive whiskers, electrically conductive metal oxides, and electrically conductive organic materials. Examples of the graphite include natural graphite and artificial graphite. Examples of the carbon black include acetylene black, ketjen black (registered trademark), channel black, furnace black, lampblack, and thermal black. Examples of the metal powders include aluminum powders. Examples of the electrically conductive whiskers include zinc oxide whiskers and potassium titanate whiskers. Examples of the electrically conductive metal oxides include titanium oxide. Examples of the electrically conductive organic materials include phenylene derivatives.

A material that can be used as the electrically conductive agent may be used to cover at least part of the surface of the binder. For example, the binder may be covered with carbon black. This can improve the capacity of the battery.

The separator 14 may be formed of a material that has high ion permeability and sufficient mechanical strength. Examples of such a material include microporous thin films, woven fabrics, and nonwoven fabrics. More specifically, it is desirable that the separator 14 be formed of a polyolefin, such as polypropylene or polyethylene. The separator 14 formed of a polyolefin has not only good durability but also a shutdown function in case of excessive heating. The separator 14 has a thickness in the range of 10 to 300 $\mu$m (or 10 to 40 $\mu$m), for example. The separator 14 may be a monolayer film formed of one material. Alternatively, the separator 14 may be a composite film (or multilayer film) formed of two or more materials. The separator 14 has a porosity in the range of 30% to 70% (or 35% to 60%), for example. The term "porosity", as used herein, refers to the volume ratio of pores to the separator 14. The "porosity" is measured by a mercury intrusion method, for example.

The non-aqueous electrolyte solution contains a non-aqueous solvent and a lithium salt dissolved in the non-aqueous solvent.

Examples of the non-aqueous solvent include cyclic carbonate solvents, chain carbonate solvents, cyclic ether solvents, chain ether solvents, cyclic ester solvents, chain ester solvents, and fluorinated solvents.

Examples of the cyclic carbonate solvents include ethylene carbonate, propylene carbonate, and butylene carbonate.

Examples of the chain carbonate solvents include dimethyl carbonate, ethyl methyl carbonate, and diethyl carbonate.

Examples of the cyclic ether solvents include tetrahydrofuran, 1,4-dioxane, and 1,3-dioxolane.

Examples of the chain ether solvents include 1,2-dimethoxyethane and 1,2-diethoxyethane.

Examples of the cyclic ester solvents include $\gamma$-butyrolactone.

Examples of the chain ester solvents include methyl acetate.

Examples of the fluorinated solvents include fluoroethylene carbonate, methyl fluoropropionate, fluorobenzene, fluoroethyl methyl carbonate, and fluorodimethylene carbonate.

The non-aqueous solvent may be one non-aqueous solvent selected from these used alone. Alternatively, the non-aqueous solvent may be a combination of two or more non-aqueous solvents selected from these.

The non-aqueous electrolyte solution may contain at least one fluorinated solvent selected from the group consisting of fluoroethylene carbonate, methyl fluoropropionate, fluorobenzene, fluoroethyl methyl carbonate, and fluorodimethylene carbonate.

These fluorinated solvents in the non-aqueous electrolyte solution improve the oxidation resistance of the non-aqueous electrolyte solution.

Consequently, even when the battery 10 is charged at a high voltage, the battery 10 can operate stably.

In the battery according to the second embodiment, the electrolyte may be a solid electrolyte.

Examples of the solid electrolyte include organic polymer solid electrolytes, oxide solid electrolytes, and sulfide solid electrolytes.

Examples of the organic polymer solid electrolytes include compounds of a polymer and a lithium salt.

The polymer may have an ethylene oxide structure. The ethylene oxide structure can increase the lithium salt content and ionic conductivity.

Examples of the oxide solid electrolytes include NASICON-type solid electrolytes, exemplified by $LiTi_2(PO_4)_3$ and element substitution products thereof, $(LaLi)TiO_3$ perovskite solid electrolytes, LISICON-type solid electrolytes, exemplified by $Li_{14}ZnGe_4O_{16}$, $Li_4SiO_4$, $LiGeO_4$, and element substitution products thereof, garnet solid electrolytes, exemplified by $Li_7La_3Zr_2O_{12}$ and element substitution products thereof, $Li_3N$ and H substitution products thereof, and $Li_3PO_4$ and N substitution products thereof.

Examples of the sulfide solid electrolytes include $Li_2S\text{-}P_2S_5$, $Li_2S\text{-}SiS_2$, $Li_2S\text{-}B_2S_3$, $Li_2S\text{-}GeS_2$, $Li_{3.25}Ge_{0.25}P_{0.75}S_4$, and $Li_{10}GeP_2S_{12}$. LiX (X: F, Cl, Br, I), $MO_y$, or $Li_xMO_y$ (M: P, Si, Ge, B, Al, Ga, or In) (x, y: natural number) may be added to the sulfide solid electrolytes.

Among these, in particular, sulfide solid electrolytes have high formability and ionic conductivity. Thus, a sulfide solid electrolyte can be used as a solid electrolyte to produce a battery with a higher energy density.

Among sulfide solid electrolytes, $Li_2S\text{-}P_2S_5$ has high electrochemical stability and higher ionic conductivity. Thus, $Li_2S\text{-}P_2S_5$ can be used as a solid electrolyte to produce a battery with a higher energy density.

A solid electrolyte layer may contain the non-aqueous electrolyte solution.

A non-aqueous electrolyte solution in a solid electrolyte layer facilitates lithium ion transfer between an active material and the solid electrolyte. Consequently, the battery can have a higher energy density.

In addition to a solid electrolyte, a solid electrolyte layer may contain a gel electrolyte or an ionic liquid.

The gel electrolyte may be a polymer material containing a non-aqueous electrolyte solution. The polymer material may be poly(ethylene oxide), polyacrylonitrile, poly(vinylidene difluoride), poly(methyl methacrylate), or a polymer having an ethylene oxide bond.

A cation in the ionic liquid may be an aliphatic chain quaternary salt, such as tetraalkylammonium or tetraalkylphosphonium, an alicyclic ammonium, such as pyrrolidinium, morpholinium, imidazolinium, tetrahydropyrimidinium, piperazinium, or piperidinium, or a nitrogen-containing heterocyclic aromatic cation, such as pyridinium or imidazolium. An anion in the ionic liquid may be $PF_6^-$, $BF_4^-$, $SbF_6^-$, $AsF_6^-$, $SO_3CF_3^-$, $N(SO_2CF_3)_2^-$, $N(SO_2C_2F_5)_2^-$, $N(SO_2CF_3)(SO_2C_4F_9)^-$, or $C(SO_2CF_3)_3^-$. The ionic liquid may contain a lithium salt.

Examples of the lithium salt include $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. The lithium salt may be one lithium salt selected from these used alone. Alternatively, the lithium salt may be a mixture of two or more lithium salts selected from these. The concentration of the lithium salt ranges from 0.5 to 2 mol/l, for example.

The battery according to the second embodiment may be of various types, such as a coin type, a cylindrical type, a square or rectangular type, a sheet type, a button type, a flat type, or a layered type.

EXAMPLES

<Example 1>

[Production of Positive-Electrode Active Material]

Lithium composite manganese oxides ($Li_2MnO_3$, $LiMnO_2$) and lithium cobalt oxide ($LiCoO_2$) were produced by a known method. The resulting $Li_2MnO_3$, $LiMnO_2$, $LiCoO_2$, and LiF were weighed at a mole ratio of $Li_2MnO_3/LiMnO_2/LiCoO_2/LiF = 3/1/4/1$.

The raw materials, together with a proper amount of $\phi$5-mm zirconia balls, were put in a 45-cc zirconia container, which was then sealed in an argon glove box.

The raw materials were removed from the argon glove box and were treated in a planetary ball mill at 600 rpm for 35 hours.

The resulting compound was fired in the air at 700°C for 1 hour.

The resulting positive-electrode active material was subjected to X-ray powder diffractometry. Fig. 2 shows the results.

The space group of the positive-electrode active material was R-3m.

The integrated intensity ratio $I_{(003)}/I_{(104)}$ of a peak on the (003) plane to a peak on the (104) plane in the positive-electrode active material was 0.75.

The composition of the positive-electrode active material was determined by ICP spectroscopy, an inert gas fusion-infrared absorption method, and ion chromatography.

The positive-electrode active material had a composition of $Li_{1.2}Mn_{0.4}Co_{0.4}O_{1.9}F_{0.1}$.

[Fabrication of Battery]

70 parts by mass of the positive-electrode active material, 20 parts by mass of an electrically conductive agent, 10 parts by mass of poly(vinylidene difluoride) (PVDF), and a proper amount of 2-methylpyrrolidone (NMP) were mixed to prepare a positive-electrode mixture slurry.

The positive-electrode mixture slurry was applied to one side of a positive-electrode current collector formed of aluminum foil 20 $\mu$m in thickness.

The positive-electrode mixture slurry was dried and rolled to form a positive-electrode sheet with a positive-electrode active material layer. The positive-electrode sheet had a thickness of 60 $\mu$m.

A circular positive electrode 12.5 mm in diameter was punched out from the positive-electrode sheet.

A circular negative electrode 14.0 mm in diameter was punched out from lithium metal foil 300 $\mu$m in thickness.

Fluoroethylene carbonate (FEC), ethylene carbonate (EC), and ethyl methyl carbonate (EMC) were mixed at a volume ratio of 1:1:6 to prepare a non-aqueous solvent.

$LiPF_6$ was dissolved at a concentration of 1.0 mol/l in the non-aqueous solvent to prepare a non-aqueous electrolyte solution.

A separator (manufactured by Celgard, LLC., product number 2320, 25 $\mu$m in thickness) was impregnated with the non-aqueous electrolyte solution. This separator is a 3-layer separator composed of a polypropylene layer, a polyethylene layer, and a polypropylene layer.

A CR2032 coin-type battery was fabricated from the positive electrode, the negative electrode, and the separator in a dry box maintained at a dew point of - 50°C.

<Examples 2 to 19>

The precursor and the mixing ratio were changed from those described in Example 1.

Table 1 lists the compositions of the positive-electrode active materials according to Examples 2 to 19.

The firing conditions were changed in the range of 300°C to 700°C and in the range of 1 to 5 hours from those described in Example 1.

Except for these, the positive-electrode active materials according to Examples 2 to 19 were synthesized in the same manner as in Example 1.

The precursors in Examples 2 to 19 were weighed at the stoichiometric ratio and were mixed in the same manner as in Example 1.

For example, in Example 9, each precursor was weighed and mixed at a mole ratio of $Li_2MnO_3/LiMnO_2/LiNiO_2/LiF = 3/1/4/1$.

The space group of each compound obtained as the positive-electrode active materials according to Examples 2 to 19 was R-3m.

Coin-type batteries were fabricated from the positive-electrode active materials according to Examples 2 to 19 in the same manner as in Example 1.

<Comparative Example 1>

Lithium cobalt oxide ($LiCoO_2$) was produced by a known method.

The lithium cobalt oxide was subjected to X-ray powder diffractometry.

The space group of the lithium cobalt oxide was R-3m.

The integrated intensity ratio $I_{(003)}/I_{(104)}$ of a peak on the (003) plane to a peak on the (104) plane in the lithium cobalt oxide was 1.20.

The lithium cobalt oxide was used as a positive-electrode active material to fabricate a coin-type battery in the same manner as in Example 1.

<Comparative Example 2>

$Li_2MnO_3$, $LiMnO_2$, $LiCoO_2$, and LiF were weighed at a mole ratio of $Li_2MnO_3/LiMnO_2/LiCoO_2/LiF = 3/1/4/1$.

The raw materials, together with a proper amount of $\phi$5-mm zirconia balls, were put in a 45-cc zirconia container, which was then sealed in an argon glove box.

The raw materials were removed from the argon glove box and were treated in a planetary ball mill at 600 rpm for 35 hours.

The resulting compound was fired in the air at 800°C for 1 hour.

The compound was subjected to X-ray powder diffractometry.

The space group of the compound was R-3m.

The integrated intensity ratio $I_{(003)}/I_{(104)}$ of a peak on the (003) plane to a peak on the (104) plane in the compound was 0.92.

The composition of the compound was determined by ICP spectroscopy, an inert gas fusion-infrared absorption method, and ion chromatography.

The compound had a composition of $Li_{1.2}Mn_{0.4}Co_{0.4}O_{1.9}F_{0.1}$.

The compound was used as a positive-electrode active material to fabricate a coin-type battery in the same manner as in Example 1.

<Reference Example 1>

$Li_2MnO_3$ and $LiCoO_2$ were weighed at a mole ratio of $Li_2MnO_3/LiCoO_2 = 1/1$.

The raw materials, together with a proper amount of $\phi$5-mm zirconia balls, were put in a 45-cc zirconia container, which was then sealed in an argon glove box.

The raw materials were removed from the argon glove box and were treated in a planetary ball mill at 600 rpm for 35 hours.

The resulting compound was fired in the air at 700°C for 1 hour.

The compound was subjected to X-ray powder diffractometry.

The space group of the compound was R-3m.

The integrated intensity ratio $I_{(003)}/I_{(104)}$ of a peak on the (003) plane to a peak on the (104) plane in the compound was 0.75.

The composition of the compound was determined by ICP spectroscopy, an inert gas fusion-infrared absorption method, and ion chromatography.

The compound had a composition of $Li_{1.2}Mn_{0.4}Co_{0.4}O_2$.

The compound was used as a positive-electrode active material to fabricate a coin-type battery in the same manner as in Example 1.

<Evaluation of Battery>

The current density in the positive electrode was set at 0.5 mA/cm$^2$, and the battery according to Example 1 was charged to a voltage of 4.5 V.

Subsequently, the discharge cut-off voltage was set at 2.5 V, and the battery according to Example 1 was discharged at a current density of 0.5 mA/cm$^2$.

The battery according to Example 1 had an initial energy density of 4000 Wh/L.

The current density in the positive electrode was set at 0.5 mA/cm$^2$, and the battery according to Comparative Example 1 was charged to a voltage of 4.3 V.

Subsequently, the discharge cut-off voltage was set at 3.0 V, and the battery according to Comparative Example 1 was discharged at a current density of 0.5 mA/cm$^2$.

The battery according to Comparative Example 1 had an initial energy density of 2500 Wh/L.

The initial energy densities of the coin-type batteries according to Examples 2 to 19, Comparative Example 2, and Reference Example 1 were measured in the same manner.

Table 1 shows the results.

[Table 1]

| | Average composition | x/y | $\alpha/\beta$ | $(x+y)/(\alpha+\beta)$ | $I_{(003)}/I_{(104)}$ | Space group | Energy density (Wh/L) |
|---|---|---|---|---|---|---|---|
| Example 1 | $Li_{1.2}Mn_{0.4}Co_{0.4}O_{1.9}F_{0.1}$ | 1.5 | 19 | 1.0 | 0.75 | R-3m | 4000 |
| Example 2 | $Li_{1.2}Mn_{0.4}Co_{0.4}O_{1.9}F_{0.1}$ | 1.5 | 19 | 1.0 | 0.69 | R-3m | 3750 |
| Example 3 | $Li_{1.2}Mn_{0.4}Co_{0.4}O_{1.9}F_{0.1}$ | 1.5 | 19 | 1.0 | 0.85 | R-3m | 3710 |
| Example 4 | $Li_{1.2}Mn_{0.35}Co_{0.45}O_{1.9}F_{0.1}$ | 1.5 | 19 | 1.0 | 0.77 | R-3m | 3900 |
| Example 5 | $Li_{1.2}Mn_{0.4}Co_{0.4}O_{1.95}F_{0.05}$ | 1.5 | 39 | 1.0 | 0.78 | R-3m | 3800 |
| Example 6 | $Li_{1.2}Mn_{0.4}Co_{0.4}O_{1.8}F_{0.2}$ | 1.5 | 9 | 1.0 | 0.79 | R-3m | 3430 |
| Example 7 | $Li_{1.2}Mn_{0.4}Co_{0.4}O_{1.67}F_{0.33}$ | 1.5 | 5 | 1.0 | 0.77 | R-3m | 3160 |
| Example 8 | $Li_{1.2}Mn_{0.8}O_{1.9}F_{0.1}$ | 1.5 | 19 | 1.0 | 0.67 | R-3m | 3520 |
| Example 9 | $Li_{1.2}Mn_{0.4}Ni_{0.4}O_{1.9}F_{0.1}$ | 1.5 | 19 | 1.0 | 0.82 | R-3m | 3390 |
| Example 10 | $Li_{1.2}Mn_{0.4}Co_{0.4}O_{1.95}Cl_{0.05}$ | 1.5 | 39 | 1.0 | 0.76 | R-3m | 3210 |
| Example 11 | $Li_{1.2}Mn_{0.4}Co_{0.4}O_{1.95}N_{0.05}$ | 1.5 | 39 | 1.0 | 0.76 | R-3m | 3160 |
| Example 12 | $Li_{1.2}Mn_{0.4}Co_{0.4}O_{1.95}S_{0.05}$ | 1.5 | 39 | 1.0 | 0.72 | R-3m | 3100 |
| Example 13 | $Li_{1.2}Mn_{0.4}Co_{0.4}O_{1.95}F_{0.025}Cl_{0.025}$ | 1.5 | 39 | 1.0 | 0.74 | R-3m | 3200 |
| Example 14 | $Li_{1.0}Mn_{0.5}Co_{0.5}O_{1.9}F_{0.1}$ | 1.0 | 19 | 1.0 | 0.72 | R-3m | 3040 |
| Example 15 | $Li_{1.5}Mn_{0.25}Co_{0.25}O_{1.9}F_{0.1}$ | 3.0 | 19 | 1.0 | 0.81 | R-3m | 3080 |
| Example 16 | $Li_{0.5}Mn_{0.5}Co_{0.5}O_{1.9}F_{0.1}$ | 0.5 | 19 | 0.75 | 0.62 | R-3m | 3010 |

(continued)

| | Average composition | x/y | $\alpha/\beta$ | $(x+y)/(\alpha+\beta)$ | $I_{(003)}/I_{(104)}$ | Space group | Energy density (Wh/L) |
|---|---|---|---|---|---|---|---|
| Example 17 | $Li_{1.4}Mn_{0.45}Co_{0.45}O_{1.9}F_{0.1}$ | 1.56 | 19 | 1.15 | 0.79 | R-3m | 3560 |
| Example 18 | $Li_{1.33}Mn_{0.33}Co_{0.34}O_{1.9}F_{0.1}$ | 1.99 | 19 | 1.0 | 0.79 | R-3m | 3200 |
| Example 19 | $Li_{1.14}Mn_{0.38}Co_{0.38}O_{1.9}F_{0.1}$ | 1.5 | 19 | 0.95 | 0.69 | R-3m | 3150 |
| Comparative example 1 | $LiCoO_2$ | 1.0 | - | 1.0 | 1.20 | R-3m | 2500 |
| Comparative example 2 | $Li_{1.2}Mn_{0.4}Co_{0.4}O_{1.9}F_{0.1}$ | 1.5 | 19 | 1.0 | 0.92 | R-3m | 2200 |
| Reference Example 1 | $Li_{1.2}Mn_{0.4}Co_{0.4}O_{2.0}$ | 1.5 | - | 1.0 | 0.75 | R-3m | 2900 |

Table 1 shows that the batteries according to Examples 1 to 19 have a much higher initial energy density than the batteries according to Comparative Examples 1 and 2 and Reference Example 1.

This is probably because in Examples 1 to 19 the lithium composite oxide in the positive-electrode active material contains one or two or more elements selected from the group consisting of F, Cl, N, S, Br, and I and has a crystal structure belonging to the space group R-3m, and the integrated intensity ratio $I_{(003)}/I_{(104)}$ of a peak on the (003) plane to a peak on the (104) plane in an XRD pattern satisfies $0.62 \leq I_{(003)}/I_{(104)} \leq 0.90$. This improves the energy density.

$I_{(003)}/I_{(104)}$ in Comparative Example 2 is 0.92. This suppressed cation mixing and decreased the number of three-dimensional diffusion paths of lithium. This reduces the diffusion of lithium and decreases the energy density.

In Reference Example 1, which contained no electrochemically inactive anion, such as F, Cl, N, or S, the crystal structure became unstable. This resulted in a decreased energy density.

Table 1 also shows that the batteries according to Examples 2 and 3 have a lower initial energy density than the battery according to Example 1. This is probably because Example 2 has a lower $I_{(003)}/I_{(104)}$ than Example 1. More specifically, the crystal structure became relatively unstable due to a high degree of cation mixing. This resulted in a decreased energy density. This is also probably because Example 3 has a higher $I_{(003)}/I_{(104)}$ than Example 1. Thus, three-dimensional diffusion paths of Li were reduced due to an insufficient amount of cation mixing. This resulted in a decreased energy density.

Table 1 also shows that the batteries according to Examples 5 and 6 have a lower initial energy density than the battery according to Example 1.

This is probably because Example 5 has a higher $\alpha/\beta$ than Example 1. More specifically, the capacity due to oxidation-reduction of oxygen became excessive, the effects of an electrochemically inactive anion decreased, and the structure became unstable when Li was deintercalated. Thus, the energy density decreased. Example 6 has a lower $\alpha/\beta$ than Example 1. More specifically, a decrease in the amount of charge compensation due to oxidation-reduction of oxygen and greater effects of an electrochemically inactive anion resulted in a decrease in electronic conductivity. This resulted in a decreased energy density.

Table 1 also shows that the battery according to Example 7 has a lower initial energy density than the battery according to Example 6.

This is probably because Example 7 has a still lower $\alpha/\beta$ than Example 6. More specifically, a decrease in the amount of charge compensation due to oxidation-reduction of oxygen and greater effects of an electrochemically inactive anion resulted in a decrease in electronic conductivity. This resulted in a decreased energy density.

Table 1 also shows that the batteries according to Examples 8 and 9 have a lower initial energy density than the battery according to Example 1.

This is probably because the only cation element other than Li is Mn in Example 8, which facilitated oxygen desorption and destabilized the crystal structure. This resulted in a decreased energy density. This is also probably because the use of Ni, which has a smaller orbital overlap with oxygen than Co, as a cation element instead of Co in Example 9 decreased the capacity due to an oxidation-reduction reaction of oxygen. This resulted in a decreased energy density.

Table 1 also shows that the batteries according to Examples 10 to 13 have a lower initial energy density than the battery according to Example 5.

This is probably because the use of an anion with lower electronegativity than F in Examples 10 to 13 instead of F weakened the cation-anion interaction. This resulted in a decreased energy density.

Table 1 also shows that the battery according to Example 14 has a lower initial energy density than the battery according to Example 1.

This is probably because Example 14 had a lower x/y than Example 1 (x/y = 1), which failed to ensure Li percolation paths and reduced the diffusibility of Li ions. This resulted in a decreased energy density.

Table 1 also shows that the battery according to Example 15 has a lower initial energy density than the battery according to Example 1.

This is probably because Example 15 has a higher x/y than Example 1 (x/y = 3). Thus, Li in the crystal structure was excessively deintercalated during the initial charging of the battery, and the crystal structure became unstable. This resulted in a decrease in the amount of Li intercalated during discharging. This resulted in a decreased energy density.

Table 1 also shows that the battery according to Example 16 has a lower initial energy density than the battery according to Example 1.

This is probably because Example 16 has a lower x/y (x/y = 0.5) and $(x + y)/(\alpha + \beta)$ $((x + y)/(\alpha + \beta) = 0.75)$ than Example 1. More specifically, a regular arrangement of Mn and Co due to Li deficiencies in the synthesis resulted in insufficient Li ion percolation paths and reduced diffusibility of Li ions. This resulted in a decreased energy density.

Table 1 also shows that the battery according to Example 17 has a lower initial energy density than the battery according to Example 1.

This is probably because Example 17 has a higher $(x + y)/(\alpha + \beta)$ $((x + y)/(\alpha + \beta) = 1.15)$ than Example 1. More specifically, anion deficiencies in the initial structure facilitated oxygen desorption during charging and destabilized the crystal structure. This resulted in a decreased energy density.

Table 1 also shows that the battery according to Example 18 has a lower initial energy density than the battery according to Example 1.

This is probably because Example 18 has a higher x/y (x/y = 1.99) than Example 1. Thus, excessive deintercalation of Li from the crystal structure during the initial charging of the battery destabilized the crystal structure and thereby decreased the amount of Li to be intercalated during discharging. This resulted in a decreased energy density.

Table 1 also shows that the battery according to Example 19 has a lower initial energy density than the battery according to Example 1.

This is probably because Example 19 has a lower $(x + y)/(\alpha + \beta)$ $((x + y)/(\alpha + \beta) = 0.95)$ than Example 1. Thus, a regular arrangement of Mn and Co due to a few Li deficiencies in the synthesis resulted in insufficient Li ion percolation paths and reduced diffusibility of Li ions. This is also probably because Example 19 has a lower $I_{(003)}/I_{(104)}$ than Example 1. More specifically, the crystal structure became relatively unstable due to a high degree of cation mixing. This resulted in a decreased energy density.

Industrial Applicability

A positive-electrode active material according to the present disclosure can be utilized as a positive-electrode active material for batteries, such as secondary batteries.

Reference Signs List

10    battery
11    case
12    positive-electrode current collector
13    positive-electrode active material layer
14    separator
15    sealing plate
16    negative-electrode current collector
17    negative-electrode active material layer
18    gasket
21    positive electrode
22    negative electrode

**Claims**

1.  A positive-electrode active material comprising
    a lithium composite oxide containing at least one selected from the group consisting of F, Cl, N, S, Br, and I,

wherein the lithium composite oxide has a crystal structure belonging to a space group R-3m, and
an integrated intensity ratio $I_{(003)}/I_{(104)}$ of a peak on a (003) plane to a peak on a (104) plane in an XRD pattern of the lithium composite oxide satisfies $0.62 \leq I_{(003)}/I_{(104)} \leq 0.90$.

2. The positive-electrode active material according to Claim 1, which satisfies

$$0.67 \leq I_{(003)}/I_{(104)} \leq 0.85.$$

3. The positive-electrode active material according to Claim 1 or 2, wherein the lithium composite oxide further contains Mn.

4. The positive-electrode active material according to any one of Claims 1 to 3, wherein
the lithium composite oxide contains at least one selected from the group consisting of F, Cl, N, and S.

5. The positive-electrode active material according to Claim 4, wherein
the lithium composite oxide contains F.

6. The positive-electrode active material according to Claim 1 or 2, wherein
the lithium composite oxide is represented by a composition formula $Li_xMe_yO_\alpha X_\beta$ (wherein Me denotes at least one selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si, and P, X denotes at least one selected from the group consisting of F, Cl, N, S, Br, and I, $0.5 \leq x \leq 1.5$, $0.5 \leq y \leq 1.0$, $1 \leq \alpha < 2$, and $0 < \beta \leq 1$).

7. The positive-electrode active material according to Claim 6, wherein
Me includes at least one selected from the group consisting of Mn, Co, and Ni.

8. The positive-electrode active material according to Claim 7, wherein
Me includes Mn.

9. The positive-electrode active material according to Claim 8, wherein
Mn constitutes 40% or more by mole of Me.

10. The positive-electrode active material according to any one of Claims 6 to 9, wherein
X includes at least one selected from the group consisting of F, Cl, N, and S.

11. The positive-electrode active material according to Claim 10, wherein
X includes F.

12. The positive-electrode active material according to any one of Claims 6 to 11, which satisfies

$$1.67 \leq \alpha \leq 1.95.$$

13. The positive-electrode active material according to any one of Claims 6 to 12, which satisfies

$$0.05 \leq \beta \leq 0.33.$$

14. The positive-electrode active material according to any one of Claims 6 to 13, which satisfies

$$0.5 \leq x/y \leq 3.0.$$

15. The positive-electrode active material according to Claim 14, which satisfies

$$1.5 \leq x/y \leq 2.0.$$

16. The positive-electrode active material according to any one of Claims 6 to 15, which satisfies

$$5 \leq \alpha/\beta \leq 39.$$

17. The positive-electrode active material according to Claim 16, which satisfies

$$9 \leq \alpha/\beta \leq 19.$$

18. The positive-electrode active material according to any one of Claims 6 to 17, which satisfies

$$0.75 \leq (x + y)/(\alpha + \beta) \leq 1.15.$$

19. The positive-electrode active material according to any one of Claims 1 to 18, comprising the lithium composite oxide as a main component.

20. A battery comprising:

   a positive electrode containing the positive-electrode active material according to any one of Claims 1 to 19;
   a negative electrode; and
   an electrolyte.

21. The battery according to Claim 20, wherein
   the negative electrode contains a negative-electrode active material that can adsorb and desorb lithium ions, or a material that can dissolve and precipitate lithium metal as a negative-electrode active material, and
   the electrolyte is a non-aqueous electrolyte solution.

22. The battery according to Claim 20, wherein
   the negative electrode contains a negative-electrode active material that can adsorb and desorb lithium ions, or a material that can dissolve and precipitate lithium metal as a negative-electrode active material, and
   the electrolyte is a solid electrolyte.

# FIG. 1

# FIG. 2

## INTERNATIONAL SEARCH REPORT

| International application No. |
|---|
| PCT/JP2017/041590 |

**A. CLASSIFICATION OF SUBJECT MATTER**

Int.Cl. H01M4/505(2010.01)i, C01G45/00(2006.01)i, C01G51/00(2006.01)i, C01G53/00(2006.01)i, H01M4/485(2010.01)i, H01M4/525(2010.01)i, H01M10/052(2010.01)i, H01M10/0562(2010.01)i, H01M10/0565(2010.01)i, H01M10/0566(2010.01)i

**B. FIELDS SEARCHED**

Minimum documentation searched (classification system followed by classification symbols)

Int.Cl. H01M4/505, C01G45/00, C01G51/00, C01G53/00, H01M4/485, H01M4/525, H01M10/052, H01M10/0562, H01M10/0565, H01M10/0566

| Documentation searched other than minimum documentation to the extent that such documents are included in the fields searched | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2002/40404 A1 (HITACHI MAXELL, LTD.) 23 May 2002, pages 22-27 & JP 4137635 B2 & US 2003/0082452 A1, paragraphs [0081]-[0095] & EP 1295851 A1 & KR 10-2005-0096191 A & CN 1418174 A | 1-22 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 January 2018 (25.01.2018) | 06 February 2018 (06.02.2018) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

### INTERNATIONAL SEARCH REPORT

International application No.

PCT/JP2017/041590

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2008/126370 A1 (PANASONIC CORP.) 23 October 2008, paragraphs [0081]-[0088], fig. 10, 11 & JP 2008-258160 A & US 2008/0268347 A1, paragraphs [0161]-[0169], fig. 10, 11 & EP 2071650 A1 & CN 101548416 A & KR 10-2009-0080939 A | 1-22 |
| A | JP 2004-87487 A (MATSUSHITA ELECTRIC INDUSTRIAL CO., LTD.) 18 March 2004, paragraphs [0027]-[0029] & US 2004/0126660 A1, paragraphs [0073]-[0079] & CN 1482699 A | 1-22 |
| A | JP 2011-129269 A (TOYOTA CENTRAL RESEARCH AND DEVELOPMENT LABORATORIES, INC.) 30 June 2011, paragraphs [0036]-[0037], fig. 9 & US 2011/0143205 A1, paragraph [0045], fig. 9 | 1-22 |
| A | JP 2016-110889 A (SAMSUNG SDI CO., LTD.) 20 June 2016, paragraphs [0091]-[0108] & US 2016/0164094 A1, paragraphs [0121]-[0139] & EP 3032618 A2 & CN 105702952 A & KR 10-2016-0069992 A | 1-22 |
| A | JP 2000-195514 A (TOSHIBA CORP.) 14 July 2000, paragraphs [0014]-[0032], [0123] (Family: none) | 1-22 |

Form PCT/ISA/210 (continuation of second sheet) (January 2015)

**EP 3 595 059 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016026981 A